# EUROPEAN PATENT APPLICATION

(11) **EP 4 538 975 A1**
(43) Date of publication of application: **16.04.2025**
(21) Application number: 23819826.1
(22) Date of filing: 06.06.2023
(51) Int. Cl.: G06T 7/50

(54) **IMAGE GENERATING DEVICE, OBJECT RECOGNITION DEVICE, AND IMAGE GENERATING METHOD**

(30) Priority: 08.06.2022 JP 2022092686
(71) Applicant: KAWASAKI JUKOGYO KABUSHIKI KAISHA, Kobe-shi, Hyogo 650-8670 (JP)
(72) Inventor: NAKAMURA, Kazuyuki, Akashi, 6738666 (JP); NISHIMURA, Tomoki, Akashi, 6738666 (JP); KAIDA, Shinji, Akashi, 6738666 (JP); HAGIHARA, Terumitsu, Akashi, 6738666 (JP)
(74) Representative: Wenzel Nemetzade Warthmüller Patentanwälte Part mbB
(86) International application number: PCT/JP2023/020934
(87) International publication number: WO 2023/238846

(57) **Abstract**

This image generating device generates an image for identifying a predetermined search object. The image generating device is provided with an input unit and a processing device. The input unit inputs three-dimensional point group data generated by a sensor searching the surroundings. The processing device projects the three-dimensional point group data input in the input unit on a reference plane having a direction set according to the search object and thereby generates a two-dimensional image.

## Description

### TECHNICAL FIELD

The present application mainly relates to an image generator that generates an image for identifying a detectable object.

### BACKGROUND ART

PTL 1 discloses an object detector that detects a circular object from three-dimensional point cloud data obtained using a laser scanner. The object detector generates a projection pattern by projecting the three-dimensional point cloud data onto a horizontal plane. Then, the object detector detects the circular object based on the projection pattern.

### CITATION LIST

### Patent Literature

PTL 1: Japanese Patent No. 5464915

### SUMMARY OF INVENTION

### Technical Problem

PTL 1 only discloses that the three-dimensional point cloud data is projected onto the horizontal plane. Thus, the object may be unlikely to be identified from the projection pattern, depending on a shape or orientation of the object. On the other hand, when the object is identified directly using three-dimensional point cloud data, a huge amount of calculation is required.

The present application has been made in view of the circumstances described above, its main object is to provide an image generator that generates an image by which an object can be accurately identified with a small amount of calculation.

### Solution to Problem

Problems to be solved by the present invention are as described above, and next, means for solving the problems and effects thereof will be described.

According to a first aspect of the present application, an image generator having the following configuration is provided. That is, the image generator is configured to generate an image for identifying a predetermined detectable object. The image generator includes an inputter and a processor. Three-dimensional point cloud data generated by a sensor detecting surroundings is inputted in the inputter. The processor is configured to generate a two-dimensional image by projecting the three-dimensional point cloud data that is inputted in the inputter onto a reference plane having an orientation depending on the detectable object.

According to a second aspect of the present application, an object identification apparatus having the following configuration is provided. That is, the object identification apparatus includes a sensor and an image generator. The image generator includes an inputter and a processor. Three-dimensional point cloud data generated by the sensor detecting surroundings is inputted in the inputter. The processor projects the three-dimensional point cloud data inputted in the inputter onto a reference plane oriented depending on the detectable object to generate a two-dimensional image.

According to a third aspect of the present application, the following image generation method is provided. That is, in the image generation method, an image for identifying a predetermined detectable object. In the image generation method, detecting surroundings generates three-dimensional point cloud data. In the image generation method, performing a process of projecting the three-dimensional point cloud data onto a reference plane oriented depending on the detectable object generates a two-dimensional image.

### Advantageous Effects of Invention

According to the present application, an image by which an object can be accurately identified with a small amount of calculation can be generated.

### BRIEF DESCRIPTION OF DRAWINGS

FIG. 1 is a schematic view illustrating a situation in which an AUV inspects a pipeline.
FIG. 2 is a block diagram of the AUV.
FIG. 3 is a flowchart illustrating a process of identifying the pipeline.
FIG. 4 is a drawing illustrating a distance image generated by projecting three-dimensional point cloud data onto a reference plane identical to a sea bottom surface.
FIG. 5 is a drawing illustrating a binarized image generated based on the distance image.
FIG. 6 is a drawing illustrating a contour image generated based on the binarized image.
FIG. 7 is a drawing of straight lines parallel to a longitudinal direction of the pipeline.
FIG. 8 is a flowchart illustrating a process of identifying the pipeline and an obstacle.
FIG. 9 is a drawing illustrating a distance image generated by projecting the three-dimensional point cloud data onto a reference plane perpendicular to the front-back direction.

### DESCRIPTION OF EMBODIMENTS

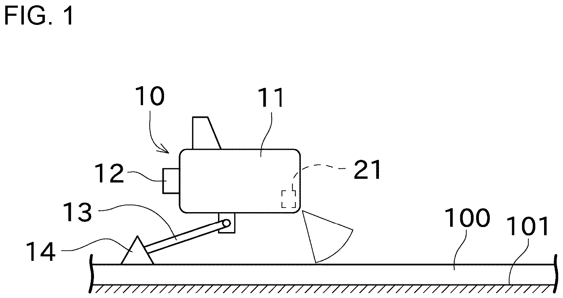

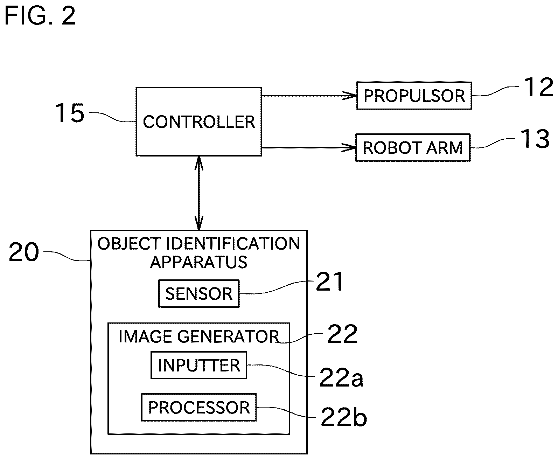

Next, an embodiment of the present application will be described with reference to drawings. Firstly, an outline of an AUV 10 will be described with reference to FIG. 1 and FIG. 2.

The AUV 10 is an abbreviation of autonomous underwater vehicle. The AUV 10 is a submersible that navigates underwater autonomously without being operated by a person. The AUV 10 detects a pipeline 100 disposed on a sea bottom 101 and inspects the pipeline 100. The pipeline 100 is an example of a long-length body. As illustrated in FIG. 1, the AUV 10 includes a main body 11, a propulsor 12, a robot arm 13, and an inspection tool 14.

A battery and a motor are provided in the main body 11. The propulsor 12 corresponds to a screw propeller and a rudder, for example. The screw propeller rotates in response to power generated by the motor, so that the propulsor 12 generates thrust. This can propel the AUV 10. In addition, the AUV 10 can be turned by operating the rudder.

The robot arm 13 is provided below the main body 11. The robot arm 13 has a plurality of joints. An actuator is provided in each of the joints. Drive of the actuator can change an orientation of the robot arm 13. The inspection tool 14 is attached to a distal end of the robot arm 13. The inspection tool 14 includes equipment for inspecting the pipeline 100. For example, the equipment included in the inspection tool 14 may be a camera that captures the pipeline 100, or may be an inspection device that inspects the degree of deterioration of anti-corrosion treatment of the pipeline 100.

As illustrated in FIG. 1 and FIG. 2, the AUV 10 further includes a controller 15 and an object identification apparatus 20.

The controller 15 is a computer including an arithmetic unit such as a CPU, and a memory such as an SSD or a flash memory. The controller 15 controls the propulsor 12 based on a detection result of the pipeline 100, which allows the AUV 10 to navigate along an area where the pipeline 100 is disposed. The controller 15 further controls the robot arm 13. Specifically, the controller 15 controls the robot arm 13 such that the distance between the inspection tool 14 and the pipeline 100 is within a predetermined range.

The object identification apparatus 20 is an apparatus that detects and identifies an object. In the present embodiment, the pipeline 100 corresponds to a detectable object. The pipeline 100 is disposed along a sea bottom 101 that is a detection surface. "The pipeline 100 is disposed along the sea bottom 101" means that the pipeline 100 is disposed so as to come into contact with the sea bottom 101 or the pipeline 100 is disposed at a position with a constant distance from the sea bottom 101. The detectable object is predetermined. The term of "predetermined" means that the type or name of the detectable object is specified, and the shape or approximate location of the detectable object is specified in advance. As illustrated in FIG. 2, the object identification apparatus 20 includes a sensor 21 and an image generator 22.

The sensor 21 is provided at a front and lower portion of the main body 11. The sensor 21 is a sonar. The sensor 21 transmits sound waves in a planar manner and receives reflected waves, so that the distance to objects in respective directions is calculated to create two-dimensional point cloud data. In the following, a "scan" refers to detection of surroundings by means of transmission and receiving of one or a series of the sound waves. When the sensor 21 performs one scan, two-dimensional point cloud data indicating positions of objects around the AUV 10 is obtained. The three-dimensional point cloud data can be obtained by the sensor 21 performing a plurality of scans while the AUV 10 is moving. A coordinate system of the three-dimensional point cloud data corresponds to a coordinate system of the AUV 10, for example. The coordinate system of the AUV 10 is a coordinate system that is composed of a front-back axis, a right-left axis, and a vertical axis based on the orientation of the AUV 10.

The image generator 22 generates an image for identifying the pipeline 100 that is the detectable object, based on the three-dimensional point cloud data generated by the sensor 21. The image generator 22 includes an inputter 22a and a processor 22b. The three-dimensional point cloud data generated by the sensor 21 is inputted in the inputter 22a. Specifically, the inputter 22a is a signal processing module that receives the three-dimensional point cloud data from the sensor 21 and performs signal processing such as amplification. The inputter 22a may be a communication module that performs wired or wireless communication with the sensor 21. The processor 22b is a computer that includes an arithmetic unit such as a CPU and a memory such as an SSD or a flash memory. The processor 22b performs processing in which the arithmetic unit executes programs prestored in the memory to generate an image for identifying the pipeline 100.

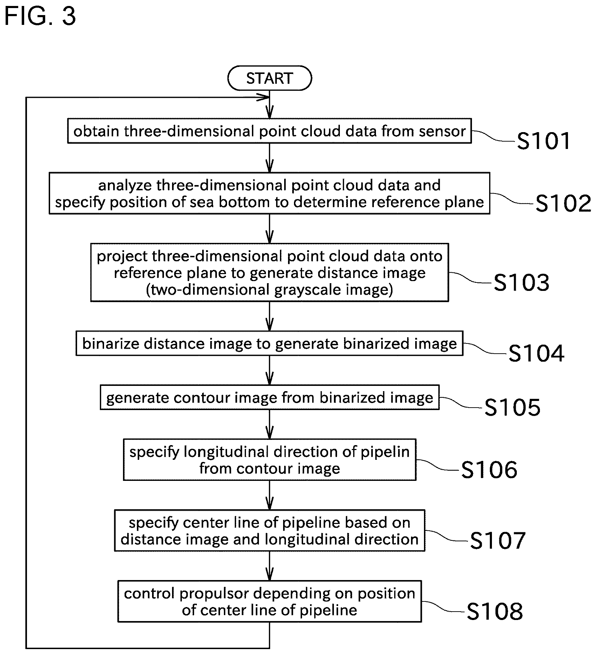

Next, details of the processing performed by the processor 22b will be described with reference to FIG. 3 to FIG. 7.

Firstly, the processor 22b obtains the three-dimensional point cloud data inputted in the inputter 22a, from the sensor 21 (S101). Subsequently, the processor 22b analyzes the three-dimensional point cloud data to identify the position of the sea bottom, and determines a reference plane based on the position of the sea bottom (S102). In the case where objects do not exist between the sensor 21 and the sea bottom, the sensor 21 receives reflected waves reflected on the sea bottom. As a result, the three-dimensional point cloud data includes a large number of point clouds indicating the sea bottom. Since the point clouds indicating the sea bottom form a large surface, the processor 22b can identify the point clouds indicating the sea bottom among the three-dimensional point cloud data. This allows the processor 22b to identify the position of the sea bottom. In the present embodiment, the processor 22b determines a sea bottom surface as the reference plane. However, the reference plane may be another plane parallel to the sea bottom surface, or may be a virtual plane parallel to the front-back axis and right-left axis in the coordinate system of AUV 10.

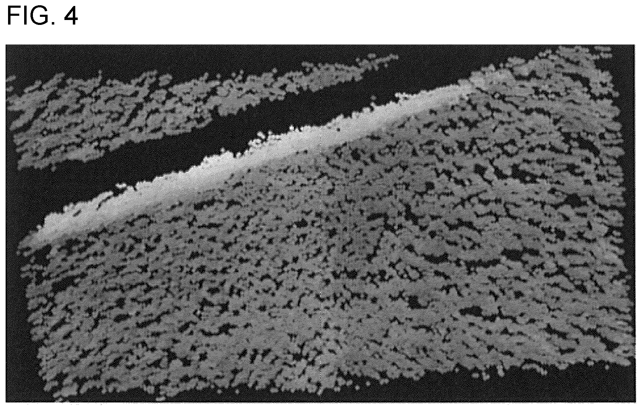

Subsequently, the processor 22b projects the three-dimensional point cloud data onto the reference plane to generate a two-dimensional image (S103, FIG. 4). At this time, the processor 22b causes the brightness of each pixel in the two-dimensional image to be varied depending on the position in the direction perpendicular to the reference plane. Therefore, the two-dimensional image generated by the processor 22b is a distance image. In detail, the farther the object is placed from the sea bottom surface that is the reference plane, the brighter the brightness of each pixel in the two-dimensional image. Thus, the brightness at the position where the pipeline 100 exists is higher than that of the sea bottom surface. Since the brightness of the two-dimensional image has three or more levels, the two-dimensional image is not a binarized image but a grayscale image. The brightness of each pixel may decrease as the distance from the reference plane increases. Instead of the brightness, another drawing parameter such as hue or saturation may be varied.

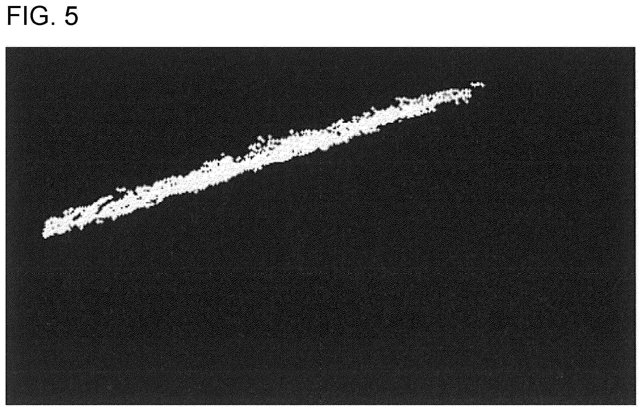

Subsequently, the processor 22b binarizes the distance image to generate a binarized image (S104, FIG. 5). The binarized image is an image drawn with two drawing parameters. The binarized image of the present embodiment is an image drawn with two colors, white and black. The processor 22b sets a threshold depending on the distance from the reference plane and causes the drawing parameters to be varied depending on whether the distance is greater than the threshold. In the present embodiment, the radius of the pipeline 100 is used as the threshold. Thus, pixels indicating an object located at a position higher than the radius of the pipeline 100 from the sea bottom surface, are drawn in white, and pixels indicating an object other than the above-mentioned object are drawn in black. This can clarify the range in which the pipeline 100 exists. The colors of white and black may be reversed. A method of determining the threshold of the present embodiment is an example, and a different value may be used. By generating the binarized image, the position at which the pipeline 100 exists becomes clear, and subsequent processing is easily performed.

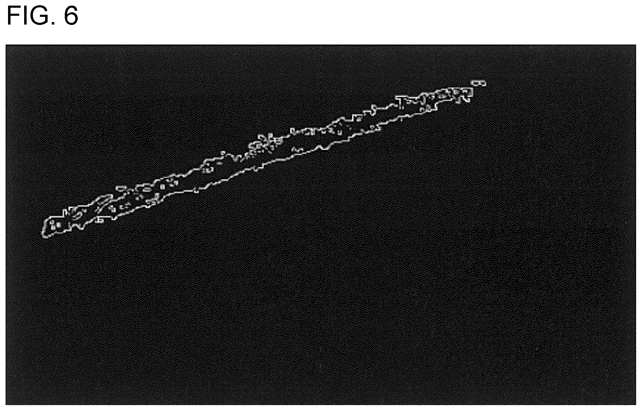

Subsequently, the processor 22b generates a contour image from the binarized image (S105, FIG. 6). The contour image is an image in which a contour of pixels indicating the pipeline 100 is extracted. The processing of contour extraction has been known, and thus will be briefly described. That is, the processor 22b sorts the pixels drawn in white into boundary pixels that are adjacent to pixels drawn in black and excluded pixels that are not adjacent to the pixels drawn in black. Then, the boundary pixels are kept in white, and the excluded pixels are converted from white to black. In this manner, an adjacent image can be generated. Generation of the contour image can highlight the shape of the pipeline 100.

Subsequently, the processor 22b identifies the longitudinal direction of the pipeline 100 from the contour image (S106). The processing of identifying the longitudinal direction from the contour image can be performed using Hough transform, for example. Hough transform is a method of generating a shape passing through the most feature points in the image. Using Hough transform can obtain a line segment passing through the contour of the pipeline 100. The direction of the line segment obtained by performing Hough transform is identified as the longitudinal direction of the pipeline 100. When a plurality of line segments is obtained by performing Hough transform, the longitudinal direction of the pipeline 100 is identified using the average of orientations of the respective line segments, for example. The longitudinal direction of the pipeline 100 may be identified using processing other than Hough transform.

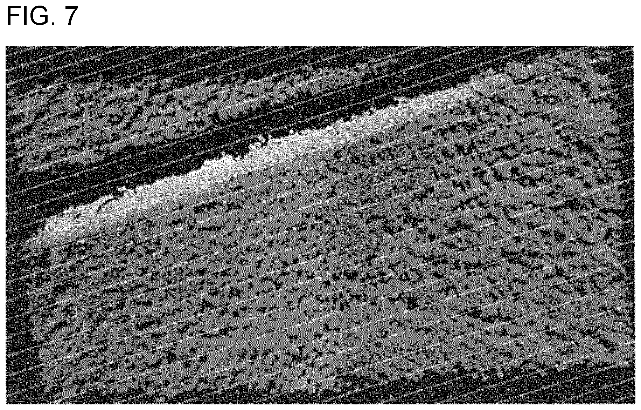

Subsequently, the processor 22b identifies a center line of the pipeline 100 based on the distance image and the longitudinal direction (S107). Specifically, as illustrated in FIG. 7, the processor 22b places the plurality of line segments parallel to the longitudinal direction obtained in Step S106 on the distance image. The distance between the line segments is preferably equal to or less than the diameter of the pipeline 100, for example, and more preferably equal to or less than 1/2, 1/5, or 1/10 of the diameter of the pipeline 100. It is obvious that the distance between the line segments is greater than zero. Next, the processor 22b adds up the brightness of the pixels located on each line segment to calculate an overall brightness value. The processor 22b identifies the line segment with the largest brightness value as the center line of the pipeline 100. In this manner, the processor 22b identifies the pipeline 100 from the data obtained by the sensor 21.

The processor 22b controls the propulsor 12 depending on the position of the center line of the pipeline 100 (S108). Specifically, the processor 22b controls the propulsor 12 such that the AUV 10 navigates along the center line of the pipeline 100. Here, the distance image is an image in which three-dimensional point cloud data in the AUV coordinate system is projected. Thus, the position of the AUV 10 relative to the position thereof on the distance image has been known. Thus, the processor 22b can identify displacement of the AUV 10 relative to the center line of the pipeline 100. The processor 22b controls the propulsor 12 such that the displacement of the left and right axes in the AUV coordinate system is close to zero.

The above-described processing in Steps S101 to S108 is repeated at a constant cycle. Therefore, even when the AUV 10 displaces left or right relative to the pipeline 100, the displacement of the left and right axes is corrected to zero. This allows the AUV 10 to continue to navigate along the pipeline 100. As a result, the inspection of the pipeline 100 can be performed automatically.

In the second and subsequent processing of Step S103, the processor 22b extracts three-dimensional point cloud data in a specific area, among the three-dimensional point cloud data obtained from the sensor 21, and projects the three-dimensional point cloud data in the specific area onto the reference plane. The specific area corresponds to an area where a detectable object is estimated to exist. The processor 22b does not project three-dimensional point cloud data in areas other than the specific area, onto the reference plane. This can reduce the amount of data processed by the processor 22b.

Specifically, the processor 22b performs the following processing to determine the specific area. In the present embodiment, performing the processing in Step S107 identifies the center line of the pipeline 100. The pipeline 100 obtained in the subsequent scan is estimated to be located in the vicinity of the identified center line. Thus, the processor 22b treats the area around the identified center line as the specific area. For example, when a plurality of pipelines 100 are arranged, the processor 22b treats an area including the pipeline 100 identified in Step S107 but not including a pipeline 100 adjacently arranged, as the specific area. More specifically, the processor 22b determines boundary planes that are each parallel to the center line identified in Step S107 and each parallel to the vertical axis. The boundary planes are determined as a pair on the left and right of the identified center line. The area sandwiched between the boundary planes corresponds to the specific area. The distance between the boundary planes and the center line is less than an arrangement spacing of the pipelines 100. The specific area is determined in the above-described manner, which can reduce the possibility of misrecognizing the pipelines 100 that are adjacently arranged.

The processing of extracting the specific three-dimensional point cloud data from the three-dimensional point cloud data is not essential and may be omitted. That is, even in the second and subsequent processing in Step S103, all the obtained three-dimensional point cloud data may be projected onto the reference plane.

The processing of identifying the pipeline 100 or specifying its position directly using three-dimensional point cloud data requires various matrix calculations for a huge number of points, resulting in a huge amount of calculation. In contrast, as in the present embodiment, the processing of generating the distance image from the three-dimensional point cloud data mainly requires only calculating the distance from one point in the three-dimensional coordinate system to the reference plane for each pixel. Thus, the processing of the present embodiment can be performed with a smaller amount of calculation than in the case where the three-dimensional data is directly processed. Since the processing performed after generation of the distance image is two-dimensional image processing, the amount of calculation is smaller than in the case where the three-dimensional data is directly processed. This can identify the pipeline 100 or specify its position with a smaller amount of calculation than in the case where the three-dimensional data is directly processed.

In the present embodiment, the processing of identifying the center line of the pipeline 100 is just an example, and different processing can be used to identify the center line of the pipeline 100. For example, a straight line passing through a central portion of the two line segments obtained in Step S106 may be identified as the center line of the pipeline 100. Alternatively, a straight line passing through the central portion of an area drawn in white in the binarized image may be identified as the center line of the pipeline 100.

The distance image, binarized image, or the like generated in the present embodiment can be used for purposes other than the processing of identifying the center line of the pipeline 100. For example, the distance image, binarized image, or the like may be used for the processing of recording the position of the pipeline 100 at the sea bottom.

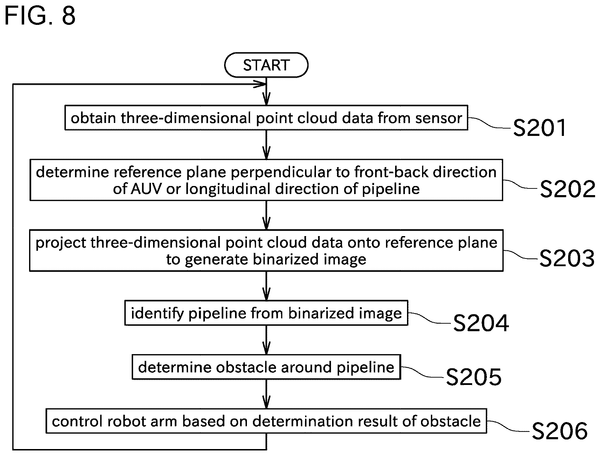

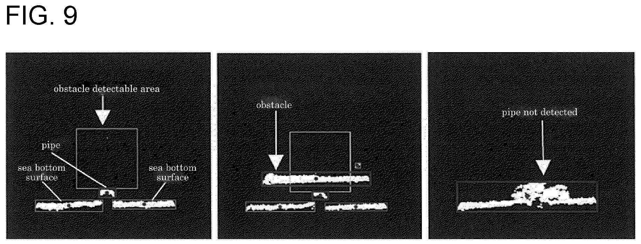

Subsequently, the processing of projecting the three-dimensional point cloud data onto another reference plane will be described with reference to FIGS. 8 and 9.

As described above, the AUV 10 controls the robot arm 13 such that the distance between the inspection tool 14 and the pipeline 100 is within a predetermined range. However, when an obstacle exists above the pipeline 100 or when the pipeline 100 cannot be identified, the controller 15 moves the inspection tool 14 away from the pipeline 100.

This can suppress the damage to the inspection tool 14. The image generator 22 can also be used for detection of this type of pipeline 100 and obstacles. Hereinafter, details of such processing will be described. The detectable objects in this processing correspond to the pipeline 100 and obstacles existing around the pipeline 100.

Firstly, the processor 22b obtains three-dimensional point cloud data from the sensor 21 (S201). Subsequently, the processor 22b determines a reference plane (S202). The reference plane is, for example, a plane perpendicular to the front-back direction of the AUV 10, or a plane perpendicular to the longitudinal direction of the pipeline 100. The front-back direction of the AUV 10 is one of coordinate axes in the AUV coordinate system. The longitudinal direction of the pipeline 100 can be identified by the above-described processing in Step S106. It is preferable that the reference plane is located ahead of the current position of the AUV 10 at a predetermined distance, for example.

Subsequently, the processor 22b projects the three-dimensional point cloud data onto the reference plane to generate a binarized image (S203). When an object exists on the reference plane, the processor 22b draws the object in white. When an object does not exist on the reference plane, the processor 22b draws the object in black. The distance image may be generated instead of the binarized image. Subsequently, the processor 22b identifies the pipeline 100 from the binarized image (S204). The pipeline 100 can be identified based on the approximate position and size of the pipeline 100. The approximate position and size of the pipeline 100 have been known. Alternatively, the position and size of the pipeline 100 can be identified by the above-described processing in Step S107. In some cases, the pipeline 100 cannot be identified depending on the range where an obstacle exists.

Subsequently, the processor 22b determines whether an obstacle exists around the pipeline 100 (S205). Specifically, as illustrated in the left diagram of FIG. 9, the processor 22b defines an obstacle detectable area at a position above the pipeline 100, and determines that an obstacle exists when an object exists in such an area. The center diagram of FIG. 9 shows a binarized image when the object exists in the obstacle detectable area. The right diagram of FIG. 9 illustrates an example of the case where an obstacle covers the pipeline 100 and the pipeline 100 cannot be detected. Therefore, when the processor 22b cannot identify the pipeline 100 in Step S204, the processor 22b determines that an obstacle exists around the pipeline 100.

Subsequently, the processor 22b controls the robot arm 13 based on an obstacle determination result (S206). Specifically, when it is determined that the obstacle exists around the pipeline 100, the orientation of the robot arm 13 is changed such that the inspection tool 14 does not come into contact with the obstacle.

The above-described processing in Steps S201 to S206 is repeated at a constant cycle. Thus, at a timing when the obstacle appears around the pipeline 100, the inspection tool 14 can be moved away from the obstacle.

As described above, the image generator 22 of the present embodiment performs an image generation method of generating an image for identifying the pipeline 100. The image generator 22 includes an inputter 22a and a processor 22b. The three-dimensional point cloud data generated by the sensor 21 detecting surroundings is inputted into the inputter 22a. The processor 22b generates a two-dimensional image by projecting the three-dimensional point cloud data inputted into the inputter 22a onto the reference plane having an orientation depending on the pipeline 100. The above-described configuration is Feature 1.

The pipeline 100 is identified using the two-dimensional image, so that the amount of calculation can be significantly reduced compared to a method performed by directly using the three-dimensional point cloud data. In particular, the two-dimensional image is projected onto the reference plane having the orientation depending on the pipeline 100, which can generate an image by which the pipeline 100 can be accurately identified even using the two-dimensional image.

In the image generator 22 of the present embodiment, the processor 22b generates a distance image in which the drawing parameters of each pixel are changed depending on the position in the direction perpendicular to the reference plane, as the two-dimensional image. The above-described configuration is Feature 2.

Accordingly, there is more information compared to the binarized image. As a result, the detectable objects can be more accurately identified.

In the image generator 22 of the present embodiment, the detectable objects include the pipeline 100 corresponding to a long-length body. The processor 22b projects the three-dimensional point cloud data onto the reference plane that is a plane parallel to the longitudinal direction of the pipeline 100 or a plane perpendicular to the longitudinal direction of the pipeline 100, thereby generating the two-dimensional image. The above-described configuration is Feature 3.

Accordingly, a surface on which the characteristics of the long-length body are likely to appear can be used as the reference plane. As a result, the detectable object can be accurately identified.

In the image generator 22 of the present embodiment, the pipeline 100 corresponding to the detectable object is disposed along the sea bottom 101 corresponding to a detection surface. The processor 22b projects the three-dimensional point cloud data onto the reference plane that is a plane identical to the sea bottom 101 or a plane parallel to the sea bottom 101, to generate the two-dimensional image. The above-described configuration is Feature 4.

Accordingly, a surface on which the characteristics of the detectable object are likely to appear relative to the detection surface can be used as the reference plane. As a result, the detectable object can be accurately identified.

In the image generator 22 of the present embodiment, the processor 22b identifies the position of the sea bottom 101 based on the three-dimensional point cloud data inputted from the sensor 21. The above-described configuration is Feature 5.

Accordingly, using the sensor 21 can specify the position of the sea bottom 101 and identify the pipeline 100. Therefore, the sensor 21 can be used effectively.

In the image generator 22 of the present embodiment, the processor 22b extracts specific three-dimensional point cloud data from the three-dimensional point cloud data inputted from the sensor 21, and projects the specific three-dimensional point cloud data onto the reference plane to generate the two-dimensional image. The above-described configuration is Feature 6.

Accordingly, the amount of data processed by the processor 22b can be reduced.

The object identification apparatus 20 of the present embodiment includes the image generator 22 and the sensor 21. The processor 22b identifies the pipeline 100 by analyzing the distance image. The above-described configuration is Feature 7.

In the object identification apparatus 20 of the present embodiment, the sensor 21 is mounted on the AUV 10. The processor 22b identifies the pipeline 100 while the AUV 10 is moving. The above-described configuration is Feature 8.

Accordingly, the processing depending on the identification result of the object identification apparatus 20 can be performed in real time.

In the object identification apparatus 20 of the present embodiment, the sensor 21 generates the two-dimensional point cloud data in one scan. The sensor 21 performs a plurality of scans to generate the three-dimensional point cloud data while the AUV 10 is moving. The above-described configuration is Feature 9.

Accordingly, the three-dimensional point cloud data can be generated using an inexpensive sensor.

In the object identification apparatus 20 of the present embodiment, the processor 22b generates the distance image corresponding to the two-dimensional image in which the drawing parameters of each pixel are changed depending on the position in the direction perpendicular to the reference plane. The processor 22b generates the contour image by binarizing the distance image in accordance with the drawing parameters to further extract the contour. The processor 22b specifies the longitudinal direction of the pipeline 100 based on the contour image and identifies the pipeline 100 as a detectable object based on the longitudinal direction. The above-described configuration is Feature 10.

Accordingly, the pipeline 100 can be accurately identified.

The above-described Features 1 to 10 can be appropriately combined as long as no inconsistency occurs. For example, Feature 3 can be combined with at least one of Features 1 and 2. Feature 4 can be combined with at least one of Features 1 to 3. Feature 5 can be combined with at least one of Features 1 to 4. Feature 6 can be combined with at least one of Features 1 to 5. Feature 7 can be combined with at least one of Features 1 to 6. Feature 8 can be combined with at least one of Features 1 to 7. Feature 9 can be combined with at least one of Features 1 to 8. Feature 10 can be combined with at least one of Features 1 to 9.

Although a preferred embodiment of the present invention has been described as above, the above-described configuration may be modified as follows, for example.

The robot arm 13 and the inspection tool 14 are not essential components and may be omitted. In this case, the object identification apparatus 20 specifies and stores the position of the pipeline 100.

In the above-described embodiment, the processor 22b generates images and identifies objects. Alternatively, the processor 22b may only generate the images, and a device other than the processor 22b may identify the objects.

In the above-described embodiment, the object identification apparatus 20 identifies the pipeline 100 in real time during navigation of the AUV 10. Alternatively, the object identification apparatus 20 may generate and store a two-dimensional image during navigation of the AUV 10, and then identify the pipeline 100 after the AUV 10 has arrived at port.

In the above-described embodiment, the object identification apparatus 20 and the image generator 22 that are mounted on the AUV 10 serving as a moving body have been described, but they may be mounted on other moving bodies. For example, they may be mounted on a vehicle, a ship, or an aircraft. The moving body is not limited to an autonomous moving body, and may be a moving body operated by an operator.

Examples of a vehicle include an autonomous vehicle that travels on a work site such as a construction site or a farm. Such an autonomous vehicle detects a gutter as a detectable object and takes evasive action. Alternatively, the autonomous vehicle may travel along a gutter serving as a detectable object. The gutter is an example of a long-length body.

Examples of other vehicles include an agricultural vehicle. Such an agricultural vehicle detects a ridge in a field and travels along the ridge while working. The ridge is a detectable object and an example of a long-length body. Crops on the ridge may be also added as the detectable object. In this case, the vehicle can perform agricultural work such as spraying of agricultural chemicals on the crops.

Examples of an aircraft include a drone. Such a drone flies along a pipe provided on the wall or ceiling and inspects the pipe. The pipe serves as a detectable object and is an example of a long-length body. Air conditioning equipment provided on the wall or ceiling may be also added as the detectable object. In this case, the drone can perform maintenance work on the air conditioning equipment.

The technical content described using the AUV 10 as an example in the above-described embodiment can be applied to other moving bodies as long as no contradiction occurs. For example, the processing of extracting specific three-dimensional point cloud data from the three-dimensional point cloud data inputted from the sensor 21 can be applied to the above-described agricultural vehicle. Specifically, the processor 22b first extracts specific three-dimensional point cloud data whose vertical position is equal to or lower than the height of the ridge from the three-dimensional point cloud data inputted from the sensor 21. Accordingly, the specific three-dimensional point cloud data does not include many crops growing on the ridge, which can accurately detect the shape of the ridge. The height of the ridge is known, but may be calculated based on the three-dimensional point cloud data. Subsequently, the processor 22b performs the processing shown in the flowchart of FIG. 3 to specify the position and longitudinal direction of the ridge. After that, the processor 22b determines a boundary plane that is parallel to the longitudinal direction and vertical direction of the ridge and passes through a central portion of the ridge in the width direction. The processor 22b extracts three-dimensional point cloud data in an area between the left and right boundary planes and projects the extracted specific three-dimensional point cloud data onto a reference plane parallel to the side of the vehicle to generate a two-dimensional image. The processor 22b identifies the position and shape of the crops based on the two-dimensional image.

n the above-described embodiment, the detectable object includes the long-length body, but need not include the long-length body. In this case, it is preferable to apply a reference plane oriented depending on the detectable object. For example, when a detectable object has a surface with a characteristic shape, it is preferable to apply a reference plane that is parallel or approximately parallel to the surface with the characteristic shape.

In the above-described embodiment, the sensor 21 that generates the two-dimensional point cloud data in one scan is used, but a sensor that generates three-dimensional point cloud data in one scan, such as a three-dimensional LIDAR (Laser Imaging Detection and Ranging), may be also used.

In the above-described embodiment, the object identification apparatus 20 and the image generator 22 are mounted on the moving object, but may be mounted on equipment other than the moving object. In this case, the object identification apparatus 20 is preferably equipped with a sensor that generates three-dimensional point cloud data in one scan.

The flowchart shown in the above-described embodiment is merely an example, and some of processes may be omitted, details in some of processes may be changed, or new processes may be added.

he functions of the components disclosed herein can be executed using a circuit or processing circuit, including a general purpose processor, a special purpose processor, an integrated circuit, Application Specific Integrated Circuit (ASIC), a conventional circuit, and/or a combination thereof, configured or programmed to execute the disclosed functions. The processor includes a transistor and other circuits, and is thus considered as a processing circuit or a circuit. In the present disclosure, a circuit, unit, or means is hardware that executes the recited functions or is hardware that is programmed to execute the recited functions. The hardware may be hardware disclosed herein or other known hardware that is programmed or configured to execute the recited functions. In the case where the hardware is a processor considered as a type of circuit, the circuit, means, or unit is a combination of hardware and software, and the software is used to configure the hardware and/or the processor.

## Claims

1. An image generator that generates an image for identifying a predetermined detectable object, the image generator comprising:
an inputter in which three-dimensional point cloud data generated by a sensor detecting surroundings is inputted; and
a processor configured to project the three-dimensional point cloud data inputted in the inputter onto a reference plane oriented depending on the detectable object to generate a two-dimensional image.

2. The image generator according to claim 1, wherein
the processor is configured to generate, as the two-dimensional image, a distance image in which a drawing parameter of a pixel is changed depending on a position in a direction perpendicular to the reference plane.

3. The image generator according to claim 1, wherein
the detectable object includes a long-length body, and
the processor is configured to project the three-dimensional point cloud data onto the reference plane to generate the two-dimensional image,
the reference plane being a plane parallel to a longitudinal direction of the long-length body, or a plane perpendicular to the longitudinal direction of the long-length body.

4. The image generator according to claim 1, wherein
the detectable object is disposed along a detection surface, and
the processor is configured project the three-dimensional point cloud data onto the reference plane to generate the two-dimensional image,
the reference plane being a plane identical to the detection surface, or a plane parallel to the detection surface.

5. The image generator according to claim 4, wherein
the processor is configured to specify a position of the detection surface based on the three-dimensional point cloud data inputted from the sensor.

6. The image generator according to claim 1, wherein
the processor is configured to extract specific three-dimensional point cloud data from the three-dimensional point cloud data inputted from the sensor, and project the specific three-dimensional point cloud data onto the reference plane to generate a two-dimensional image.

7. An object identification apparatus comprising:
a sensor; and
an image generator including:
an inputter in which three-dimensional point cloud data generated by a sensor detecting surroundings is inputted; and
a processor configured to project the three-dimensional point cloud data inputted in the inputter onto a reference plane oriented depending on the detectable object to generate a two-dimensional image, wherein
the processor is configured to analyze the two-dimensional image to identify the detectable object.

8. The object identification apparatus according to claim 7, wherein
the sensor is mounted on a moving body, and
the processor is configured to identify the detectable object while the moving body is moving.

9. The object identification apparatus according to claim 8, wherein
the sensor generates two-dimensional point cloud data in one scan, and
the three-dimensional point cloud data is generated by the sensor performing a plurality of scans while the moving body is moving.

10. The object identification apparatus according to claim 7, wherein
the detectable object includes a long-length body,
the processor is configured to generate a distance image that is the two-dimensional image,
the distance image in which a drawing parameter of a pixel is changed depending on a position in a direction perpendicular to the reference plane,
the processor is configured to generate a contour image by binarizing the distance image depending on the drawing parameter to further extract a contour, and
the processor is configured to specify a longitudinal direction of the long-length body based on the contour image and identify the long-length body as the detectable object based on the longitudinal direction.

11. An image generation method of generating an image for identifying a predetermined detectable object, the image generation method comprising:
detecting surroundings to generate three-dimensional point cloud data; and
performing a process of projecting the three-dimensional point cloud data onto a reference plane oriented depending on the detectable object to generate a two-dimensional image.
